# EUROPEAN PATENT APPLICATION

(11) **EP 4 657 691 A1**
(43) Date of publication of application: **03.12.2025**
(21) Application number: 24382582.5
(22) Date of filing: 30.05.2024
(51) Int. Cl.: H02J 3/00, H02J 3/32, H02J 3/38, H02J 7/00

(54) **ELECTRICAL CIRCUIT AND METHOD FOR THE CONNECTION OF MULTIPLE DC SOURCES TO AN ELECTRICAL NETWORK**

(71) Applicant: Universidad del País Vasco/Euskal Herriko Unibertsitatea, 48940 Leioa, Vizcaya (ES)
(72) Inventor: GUERRERO GRANADOS, José Manuel, 48940 Leioa (BIZKAIA) (ES); LARRUSKAIN ESCOBAL, Dunixe Marene, 48940 Leioa (BIZKAIA) (ES); VILLENA CAMARERO, Unai, 48940 Leioa (BIZKAIA) (ES); STOJKOVIC TERZIC, Jelena, 11121 Belgrade (RS); RAJIC, Tomislav, 11550 Lazarevac (RS)
(74) Representative: Balder IP Law, S.L.

(57) **Abstract**

An electrical circuit for the connection of multiple DC sources to a network without subjecting their insulation to high voltages, which comprises DC modules (4) connected in series between first and second terminals (1, 2), each DC module (4) comprising DC sources (5) connected in series between positive and negative terminals (6, 7) forming a group, a DC/AC converter (9) connected to the terminals (6, 7), for converting DC from the DC sources (5) in AC, a transformer having a primary side (10) connected to the DC/AC converter (9) and a secondary side (11), and an AC/DC converter (12), connected to the secondary side (11) of the transformer. The DC modules (4) comprise a grounding protection element (15) connected between a DC midpoint of the group of DC sources (5) and ground.

## Description

### OBJECT OF THE INVENTION

The present invention relates to an electrical circuit and method for the connection of multiple direct current sources, which permits the connection of these to each other and to higher voltage systems, without subjecting their insulation to high voltage values with respect to ground. Furthermore, the invention can generate an output voltage equivalent to the set of direct current sources connected to each other in series.

### STATE OF THE ART

Today's electrical systems are made up of multiple renewable energy sources. These energy sources are linked to storage technologies to achieve greater efficiency in the generation-consumption process. This is why DC systems consisting of multiple DC sources are gaining considerable relevance. Such DC systems can be, for example, photovoltaic solar panels, batteries, or Hz electrochemical cells, among others.

However, these DC systems require multiple DC sources (or cells) in series-parallel configurations to achieve considerable power and operating voltages for the storage of electrical energy from distributed generation, among others. To implement more efficient installations, higher voltage operation is required by inserting as many DC sources as possible in series. One of the main problems of this type of systems is the voltage suffered by the DC sources that support more tension in the circuit with respect to ground, which causes the accelerated degradation of these components and a greater exposure to electrical faults. For this reason, systems with lower voltage and a greater number of DC sources in parallel are currently used to cover this storage/generation capacity.

Therefore, it is necessary to develop circuit topologies and methods that allow the connection of such DC power sources to higher voltage electrical systems to operate efficiently. In addition, such circuit topologies and methods must ensure the isolation of the most exposed DC sources.

In relation to these aspects, the following prior art documents are known:
Document EP4027482A1 refers to a system and method for batteries (DC sources) that connects in series and parallel different groups of DC arrays (wherein each array comprises several DC sources) and by means of switches decides which of the parallel branches within each series charges or discharges. However, it does not solve the problem of isolation of the upper cells. The system comprises a ground fault interrupter (GFI) which is placed, as usual, on the negative pole of the DC sources group. When the GFI switch is placed on the negative pole, the voltage to ground of the DC source group is too high and affects the isolation of the DC sources. Moreover, with this disposition, the number of DC sources arranged in series cannot be infinitely scaled, since the last DC source, connected to the positive pole, would see its value limited with respect to the GFI at the negative pole. Therefore, the circuit could not be scaled up to a high voltage.

Document KR101544935B1 proposes a series-parallel battery system and a method and apparatus for measuring its voltage. This system has multiple switches that allow varying the connections between series-parallel cells, but the problem of isolation persists by having the GFI connected to the negative pole of the installation.

In the paper "An Intermodular Active Balancing Topology for Efficient Operation of High Voltage Battery Packs in Li-Ion Based Energy Storage Systems: Switched (Flying) DC/DC Converter", M. Ceylan and A. Balikci propose series topologies connectable and disconnectable to each other for charging and discharging using electronic DC/DC converters, but still present the above problem with respect to isolation.

On the other hand, in "Power converters for battery energy storage systems connected to medium voltage systems, a comprehensive review" Lucas S. Xavier et al. make an exhaustive study on the use of power converters for the connection of batteries to medium voltage grids. Most topologies use buck/boost type DC/DC converter systems to boost the voltage to that of the grid output with an AC inverter to transmit the current to a transformer that further boosts the voltage to couple the battery bank to the higher voltage circuit. Other topologies are based on introducing cells between phase and phase distributed evenly among the three phases of the AC system, called cascaded systems, or using modular multilevel converters for direct coupling to the grid.

Finally, document ES2869451 B2 uses variations in the grounding point between the positive, negative and midpoint poles to locate potential ground faults within a system with multiple DC voltage sources. In the intermediate switching position, the extreme cell insulation stress is reduced to half that of having the GFI at the negative pole, allowing installations with twice the voltage between its terminals. However, the system is not scalable beyond the cell insulation voltage.

Therefore, an invention is required that solves the above problems and allows scalability of storage systems and direct current generation by means of DC sources, which permits the introduction of the largest possible number DC sources connected in series without causing problems of isolation of these DC sources.

### DESCRIPTION OF THE INVENTION

The present invention is intended to address the drawbacks observed in the previously stated prior art. To this end, the invention proposes an electrical circuit and method that can connect multiple DC (direct current) sources in series to form a higher voltage system that can subsequently be integrated into an electrical grid. The invention allows the connection of DC sources in series while, at the same time, it prevents the electrical insulation of the DC cells from being subjected to high voltages, which could cause its degradation.

The use of the electrical circuit of the present invention is especially advantageous in systems where several low voltage level DC sources are available and where a high voltage electrical system is required. It is important to note that low voltage refers to voltage levels below 1 kV and high voltage refers to voltage levels above 1 kV.

In this way, the electrical circuit allows the implementation of more efficient high voltage systems comprising low voltage DC sources without subjecting their insulation to large dielectric stresses.

In a first aspect of the invention, an electrical circuit that connects DC sources in series and prevents the electrical insulation of the DC sources from being subjected to high voltages is provided. The electrical circuit comprises:
- two or more DC modules connected in series between first and second terminals, wherein each DC module comprises:
   - one or more DC sources connected in series between positive and negative terminals, forming a group,
   - a DC/AC converter, connected to the terminals of the group of DC sources, for converting DC from the DC sources in AC,
   - a transformer, having a primary side connected to the output of the DC/AC converter and a secondary side,
   - an AC/DC converter, connected to the secondary side of the transformer.

In this way, the DC sources are connected in series until their voltage limit is reached. Then, the DC/AC converter converts the direct current into alternating current to generate the magnetic fields of the transformer and transfer the current to the other side (transformer secondary). The secondary side is galvanically isolated from the DC sources, which means that there is no direct current flow. In this way, the transformer provides the DC sources with galvanic isolation between the secondary side and the primary side.

The current is then rectified again in the AC/DC converter and the outputs of all the DC modules are connected in series. In this way all the DC sources are indirectly connected in series with each other without compromising their isolation and achieving at least a total voltage level equal to the sum of all the DC sources.

The DC sources can be an electric cell, a battery, a DC generator, etc., between others.

In an embodiment of the invention, the electrical circuit additionally comprises a control unit connected to the converters and the transformers and configured to regulate the DC/AC converters to generate a desired power for the transformer and configured for feeding power output from the transformer's secondary to the AC/DC converter until total voltage exiting the AC/DC converter reaches the total voltage of the DC sources multiplied by the transformer's transformation ratio. It is important to note that the power output is fed from the transformer's secondary to the AC/DC converter until said power is constant and at least similar to the total voltage of the DC sources multiplied by the transformer's transformation ratio. Similar in this case refers to the fact that there may be losses in the transformer and in this case, the total voltage of the DC sources would not be reached due to said losses.

In an embodiment of the invention, the control unit can be a computer or a processor. In an embodiment of the invention the connexion between the control unit and the converters and the transformers can be a physical connection or a wireless connection.

In an embodiment of the invention, at least one of the DC modules comprises only one DC source. The DC module also comprises a grounding protection element connected to the negative terminal of the DC source. In an embodiment of the invention, at least one of the DC modules comprises two or more DC sources. The DC module also comprises a grounding protection element connected between a DC midpoint of the group of DC sources and ground. In this way, the voltage to ground of the DC source or the DC source group is lower than when the grounding protection element is connected between the negative terminal of the DC source group and ground. In fact, when the grounding protection element is connected to the negative terminal of a DC source group the voltage is twice as high. This prevents the DC sources from being subjected to high voltages that can cause their rapid degradation.

A grounding protection element refers to an element which connects the circuit to the earth ground. This prevents a power surge from damaging the circuit. The grounding protection element can be, between others, a resistor.

As indicated, the minimum number of DC sources in each module is one. On the other hand, the maximum number of DC sources in each DC module will depend on the voltage limit from the grounding protection element to the DC source connected to the positive terminal or DC source connected to the negative terminal. This voltage must be at most the limiting voltage of the DC source dielectric.

In an embodiment of the invention, the electrical circuit additionally comprises an adapter, connected between the initial free terminal of the first AC/DC converter and the final free terminal of the last AC/DC converter (first and second terminals), configured for adapting a DC voltage coming from the DC modules to the electrical network.

In an embodiment of the invention, the adapter is selected between a DC/AC electrical power converter and a DC/DC electrical power converter. The DC/AC electrical power converter converts the DC current into AC current to be coupled to the electrical network. The DC/DC electrical power converter converts the DC current into DC current with a voltage level adapted to the DC electrical network. As it can be understood, the adapter facilitates the adaptation of the DC voltage of the sum of modules to the electrical network to which it is desired to connect the system of multiple DC sources.

In an embodiment of the invention the DC sources are selected between batteries, solar panels and hydrogen cells.

In an embodiment of the invention, each DC module additionally comprises first circuit breakers connected to both terminals of the group of DC sources to facilitate their connection and disconnection from the rest of the circuit.

In an embodiment of the invention, each DC module additionally comprises second circuit breakers connected to the DC terminals of the AC/DC converter.

In an embodiment of the invention, the circuit additionally comprises a bypass switch connected parallel to the AC/DC converter for connecting and disconnecting each DC module to the other/s DC modules. The bypass switch is opposed to the second circuit breakers so when the second circuit breakers are connected the bypass switch is disconnected and vice versa.

In an embodiment of the invention, the control unit is further configured to connect the first circuit breakers to allow energizing of the electrical circuit and connecting the second circuit breakers and disconnecting the bypass switch to connect each DC module to the rest of the circuit.

In an embodiment of the invention each DC module additionally comprises a first inrush current limiting element connected to the primary side of the transformer. The first inrush limiting element stops operating after the energizing transient has passed once the DC sources have been connected to the DC/AC converter and the transformer. In an embodiment of the invention each DC module additionally comprises a second inrush current limiting element connected to the secondary side of the transformer. The second inrush limiting element stops operating after the energizing transient has passed.

The inrush limiting elements limit inrush current to avoid gradual damage to components and avoid blowing fuses or tripping circuit breakers. The inrush limiting elements could be, for example, negative temperature coefficient thermistors, fixed resistors or controlled rheostats.

In an embodiment of the invention the DC/AC and AC/DC converters in each DC source module are bidirectional. This allows the DC sources to be charged and discharged in case they are electrical energy storing elements.

In an embodiment of the invention, the DC modules can additionally comprise one or more capacitors connected parallel to the DC sources connected in series. These capacitors filter the DC voltage.

A second aspect of the invention is a method for the connection of multiple DC power sources to an electrical network using the previously described electrical circuit, wherein the method comprises the following steps:
1) regulating (25) supply voltage and frequency in the DC/AC converter (9) to supply the primary of the transformer (10),
2) feeding (27) power output from the transformer secondary (11) to the AC/DC converter (12) until total voltage exiting the AC/DC converter (12) reaches the total voltage of the DC sources (5) multiplied by the transformer's transformation ratio.

In an embodiment of the invention, the electrical circuit further comprises first circuit breakers connected to both terminals of the group of DC sources, second circuit breakers connected to the DC terminals of the AC/DC converter and a bypass switch connected parallel to the AC/DC converter for connecting and disconnecting each DC module to the other/s DC modules. In this embodiment the method further comprises:
0) closing, previous to step 1), the first circuit breakers to allow energizing of the electrical circuit, and
3) closing, after step 2), the second circuit breakers and opening the bypass switch.

In an embodiment of the invention, the steps of the method are reversed, starting from step 3) and finishing with step 0).

The order of the steps is direct (0 to 3) if it is desired to discharge the DC sources (energy generator case), and inverse (3 to 0) if it is desired to charge the DC sources (energy storage case).

The present invention presents the advantages of using low-voltage DC sources to generate high voltages, such as the lower cost of these low-voltage DC sources and their easier storage and distribute, between others.

With the electric circuit of the present invention as many DC sources as desired can be placed in series since the electrical insulation of the DC sources is not affected. In this way, a significant voltage build-up can be achieved, which can be fed into the power grid when needed.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows an embodiment of the electrical circuit of the invention with "n" DC modules connected in series.
Figure 2 shows a detailed view of a DC module in a preferred embodiment of the invention.
Figure 3 shows a flowchart of the steps of a method for connecting multiple DC modules of the invention in series.
Figure 4 shows a graph of the DC voltages on the higher and lower voltage sides of the electrical circuit in figure 1, in an embodiment with two modules connected in series.
Figure 5 shows a table showing the insulation voltage of different points in the electrical circuit of the present invention with respect to ground in a possible use case.

### DESCRIPTION OF A WAY OF CARRYING OUT THE INVENTION

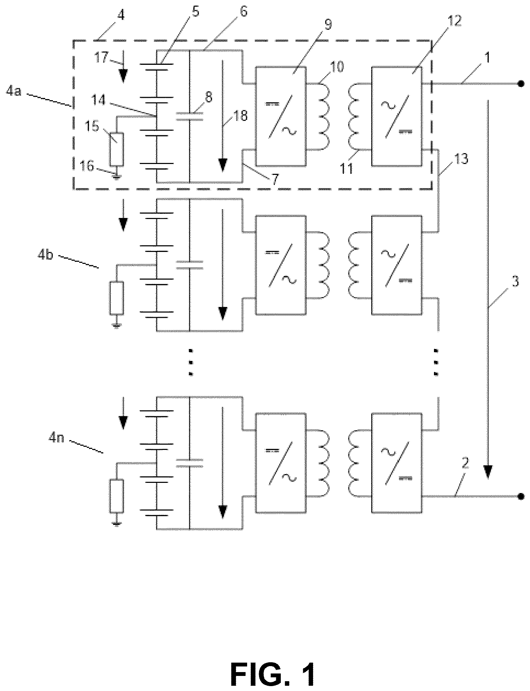

Figure 1 shows an embodiment of the electrical circuit for the connection of multiple DC power sources. In figure 1, the electrical circuit comprises "n" DC modules (4a, 4b, 4n) connected in series forming a higher DC voltage zone. The higher DC voltage zone is comprised between the positive DC pole (1) of the higher voltage side and the negative DC pole (2) of the higher voltage side. When all the DC modules (4) are connected in series, a first free terminal (from a first DC module (4)) corresponds to the positive DC pole (1) of the higher voltage side and a second free terminal (from a last DC module (4)) corresponds to the negative DC pole (2) of the higher voltage side. The total DC voltage (3) of the higher voltage side can be measured and corresponds to the sum of the output voltages of each DC module (4) connected in series with each other.

In embodiments of the invention, the positive and negative poles (1, 2) of the higher voltage side are connected to an AC/DC converter (not shown in the figures) for connection to an alternating current network or to a DC/DC converter (not shown in the figures) for adapting the voltage level to that of the direct current service network to which the possible configuration of the electrical circuit of the invention is coupled.

As shown in figure 1, each DC module (4) comprises DC sources (5) connected in series. This DC sources (5) constitute the lower voltage DC side of the DC modules (4).

These DC sources (5) may be batteries, hydrogen cells or other types of electrical energy storage, fed by DC sources, or electrical power generation sources such as photovoltaic solar panels.

The DC sources (5) are connected between a positive pole (6) of the DC module (4) and a negative pole (7) of the DC module (4) in the lower voltage region of said DC module (4).

As represented in figure 1, the DC modules (4) comprise one or more capacitors (8) connected between said poles (6, 7) to filter the DC voltage.

Moreover, a DC/AC converter (9) is connected to the poles (6, 7). The DC/AC converter (9) converts the current of the DC sources (5) to alternating current and feeds the primary of a transformer (10), which is also connected between said poles (6, 7) and to the DC/AC converter (9).

The transformer, generally with transformation ratio rt = 1:1, or higher, generates an alternating voltage on its secondary (11) which is rectified by an AC/DC converter (12).

Each AC/DC converter (12) is connected in series with its preceding and following AC/DC converter (12) of each DC module (4) by means of series interconnections (13) between modules (4).

As presented in figure 1, a DC mid-point (14) of the lower voltage side of the DC modules (4) is grounded (16) by means of a ground fault protection element (15), which allows the insulation of the DC sources (5) to be half as stressed as if it were placed on the negative pole of the DC module (7). Thus, sum of DC source voltages (17) creates a total voltage on the lower voltage side of the DC module (18), which can be twice as high as if the installation were carried out with the grounding (15) on the negative pole (7) of the DC module.

With the galvanic isolation provided by the transformer of each DC module (5), the electrical circuit of the invention can be scaled "n" times without isolation problems in the DC sources (5).

Additionally, considering the transformer transformation ratio, the total voltage of the higher voltage side (19) of the DC module is delimited. Finally, the sum of total voltages of the higher voltage side of each DC module (19) corresponds to the total DC voltage of the higher voltage side (3).

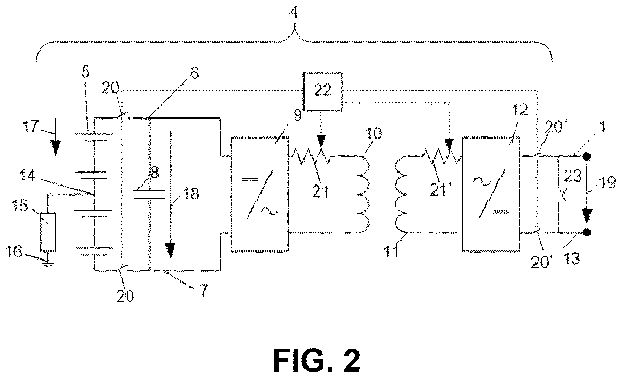

Figure 2 shows a preferred embodiment of the invention with a DC module (4) with some additional elements for its start-up and operation. As showing in the figure, the DC module (4) additionally comprises a circuit breaker (20) placed on the positive pole (6) of the DC module (4) and another circuit breaker (20) on the negative pole (7) of the DC module. The first circuit breakers (20) allow the connection and disconnection of the DC sources (5).

Once the first circuit breakers (20) on the lower voltage side have been closed, the electrical circuit is energized. However, high currents during start-up should be prevented. For this reason, the DC module (4) shown in figure 2 additionally comprises an operation and control unit (22) which can either progressively control the voltage on the converters (9, 12) or, alternatively, it can vary two inrush current limiting elements (21, 21'), which can be, for example, variable value resistors or rheostats, from a high value down to 0 Ω.

Finally, two second circuit breakers (20') are located on the DC terminals of the output of the DC module (4). These two second circuit breakers (20') are interlocked with a bypass switch (23) that allows the connection or disconnection of each of the DC modules to the others for maintenance. The second circuit breakers (20') and the bypass switch (23) are also controlled by the operation and control unit (22). If the second circuit breakers (20') are connected the bypass switch (23) and vice versa.

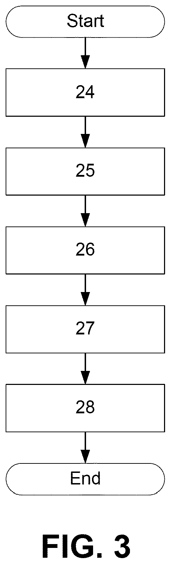

Figure 3 presents a flow diagram of the steps of a possible embodiment of a method for the connection of multiple DC sources (4), based on the electrical circuit of the invention. Firstly, in a first step (24), the first circuit breakers (20) are connected to allow energizing the rest of the circuit.

Then, in a second step (25), the supply voltage and frequency in the DC/AC converter (9) is regulated to supply the primary of the transformer (10). In a third step (26), the value of the first inrush current limiting element (21) or the DC/AC converter's voltage is regulated progressively to prevent damage to the transformer and a soft start of the DC module (4).

Later, in a fourth step (27), the power output from the transformer secondary (11) is fed to the higher voltage DC side of the DC module (5). When the total voltage on the higher voltage side of the DC module (19) reaches the total voltage on the lower voltage side of the DC module (18) multiplied by the transformer transformation ratio, the second circuit breakers (20') on the higher voltage side are actuated and the interlocked bypass switch (23) is consequently switched off in a higher voltage switch in a fifth step (28).

The steps in Figure 3 can be reversed starting with the fifth step (28) and ending with the first step (24) also changing the power flow for the load of the DC sources (5) in case they are electrical energy storage cells.

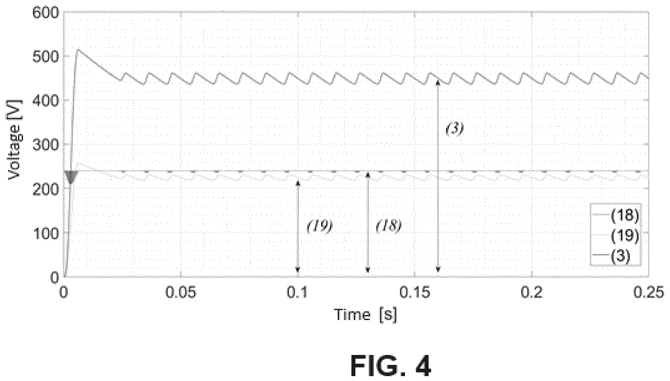

An example of application of the electrical circuit of the invention is shown in figure 4. In this figure there is a record of voltages as a function of time for a circuit as the one presented in figure 1, where there are two DC modules (4) connected in series. Each DC module (4) has a voltage (18) of 240 V which is the equivalent of 160 DC sources 5 of 1.5 V connected in series.

The transformer is of 1:1 ratio so the voltage (19) on the secondary is somewhat lower than 240 V (224.5V) because of the voltage drop across the transformer. Finally, the sum of the two voltages at the output terminals of both DC modules (4) form the total voltage (3) on the higher voltage side.

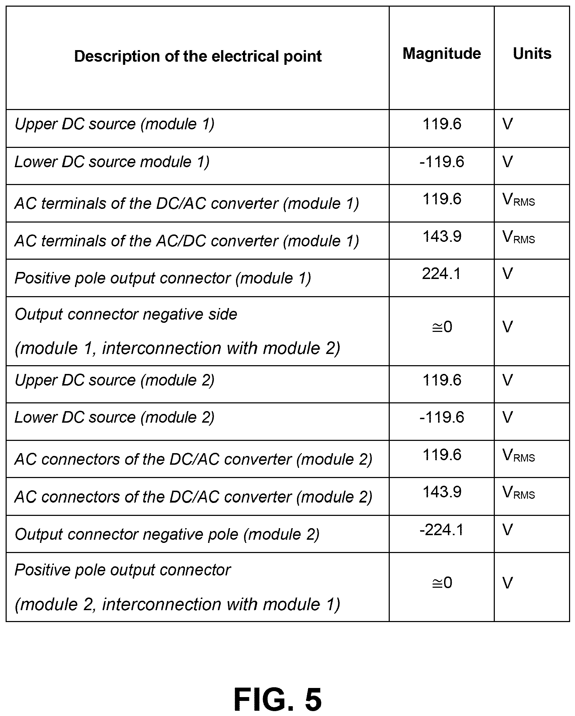

On the other hand, the circuit voltages with respect to ground of each point of the electrical circuit of figure 1 for the application of the example are evaluated in the table of figure 5. The designation "upper DC source" corresponds to the DC source (5) closest to the positive pole of the lower voltage side (6) of a DC module (4), while the DC source (5) closest to the negative pole (7) is designated "lower DC source".

Both have similar values of different polarity as the middle point is grounded. As both DC modules (4) are similar, they have similar voltages with respect to ground for their homologous points.

On the other hand, the series interconnection refers to the connection between the positive of the output of the higher voltage side of DC module (2) with the negative of the output of the higher voltage side of DC module (1). These voltages to ground are higher. However, the critical element, which is the DC source (5), has a voltage to ground half as high as on the higher voltage side. This makes it possible to install high-voltage electrical circuits only with DC sources (5) connected in series without their insulation voltage being exceeded.

The numerical signs and corresponding components indicated in Fig. 1 to 5 are further listed below:
Positive DC pole on the higher voltage side 1
Negative DC pole on the higher voltage side 2
Negative DC pole on the higher voltage side 3
DC sources module 4
DC source 5
Positive pole of the module 6
Negative pole of the module 7
Capacitor 8
DC/AC converter 9
Transformer primary 10
Transformer secondary 11
AC/DC converter 12
Serial interconnection between modules 13
Direct current midpoint 14
Ground fault protection element 15
Grounding 16
DC power supply voltage 17
Total voltage of the lower voltage side of the DC module 18
Total voltage on the high voltage side of the DC module 19
First circuit breakers 20
Second circuit breakers 20'
Inrush current limiting elements 21, 21'
Module operation and manoeuvring system 22
Interlocked by-pass switch 23
First step 24
Second step 25
Third step 26
Fourth step 27
Fifth step 28

## Claims

1. An electrical circuit for the connection of multiple DC power sources to an electrical network, the electrical circuit comprising:
- two or more DC modules (4) connected in series between first and second terminals (1, 2), wherein each DC module (4) comprises:
- one or more DC sources (5) connected in series between positive and negative terminals (6, 7), forming a group,
- a DC/AC converter (9), connected to the terminals (6, 7) of the group of DC sources (5), for converting DC from the DC sources (5) in AC,
- a transformer, having a primary side (10) connected to the output of DC/AC converter (9) and a secondary side (11),
- an AC/DC converter (12), connected to the secondary side (11) of the transformer.

2. The electrical circuit of claim 1, wherein it additionally comprises a control unit (22) connected to the converters (9, 12) and the transformer and configured to regulate the DC/AC converter (9) to generate a desired power to feed the transformer, and feeding power output from the transformer secondary (11) to the AC/DC converter (12) until total voltage exiting the AC/DC converter (12) reaches the total voltage of the DC sources (5) multiplied by the transformer's transformation ratio.

3. The electrical circuit of any of the previous claims, wherein at least one of the DC source modules (4) comprises one DC source (5) and wherein the at least one DC module (4) additionally comprises a grounding protection element (15) connected to the negative terminal (7) of the DC source (7).

4. The electrical circuit of claims 1 or 2, wherein at least one of the DC source modules (4) comprises two or more DC sources (5) and wherein the at least one DC module (4) additionally comprises a grounding protection element (15) connected between a DC midpoint of the group of DC sources (5) and ground.

5. The electrical circuit of any of the previous claims, wherein it additionally comprises an adapter, connected to the first and second terminals (1, 2) and configured to adapt a DC voltage coming from the DC modules (4) to the electrical network, the adapter being selected between a DC/AC electrical power converter and a DC/DC electrical power converter.

6. The electrical circuit of any of the previous claims, wherein the DC sources (5) are selected between batteries, solar panels and hydrogen cells.

7. The electrical circuit of any of the previous claims, wherein each DC module (4) additionally comprises at least one of:
- first circuit breakers (20) connected to both terminals of the group of DC sources (4),
- second circuit breakers (20') connected to the DC terminals of the AC/DC converter (12),
- a bypass switch (23) connected parallel to the AC/DC converter (12) for connecting and disconnecting each DC module (4) to the other/s DC modules (4).

8. The electrical circuit of claim 7 wherein the control unit (22) is further configured to close the first circuit breakers (20) to allow energizing of the electrical circuit, to close (28) the second circuit breakers (20') and to open the bypass switch (23).

9. The electrical circuit of any of the previous claims, wherein each DC module (4) additionally comprises at least one of:
- a first inrush current limiting element (21) connected to the primary side of the transformer (10),
- a second inrush current limiting element (21') connected to the secondary side (11) of the transformer.

10. The electrical circuit of any of the previous claims, wherein the DC/AC and AC/DC converters (9, 12) in each DC module (4) are bidirectional.

11. The electrical circuit of any of the previous claims, wherein the DC modules (4) additionally comprise one or more capacitors (8) connected parallel to the DC sources (5).

12. A method for the connection of multiple DC power sources to an electrical network with the electrical circuit of any of the previous claims, wherein the method comprises the following steps:
1) regulating (25) supply voltage and frequency in the DC/AC converter (9) to supply the primary of the transformer (10),
2) feeding (27) power output from the transformer secondary (11) to the AC/DC converter (12) until total voltage exiting the AC/DC converter (12) reaches the total voltage of the DC sources (5) multiplied by the transformer's transformation ratio.

13. The method of claim 12, wherein the electrical circuit further comprises first circuit breakers (20) connected to both terminals of the group of DC sources (4), second circuit breakers (20') connected to the DC terminals of the AC/DC converter (12) and a bypass switch (23) connected parallel to the AC/DC converter (12), and wherein the method further comprises:
0) closing (24), before step 1), the first circuit breakers (20) to allow energizing of the electrical circuit, and
3) closing (28), after step 2), the second circuit breakers (20') and opening the bypass switch (23).

14. The method of claim 13 wherein the steps are reversed, starting with step 4) and finishing with step 0).
